# EUROPEAN PATENT APPLICATION

(11) **EP 3 680 876 A1**
(43) Date of publication of application: **15.07.2020**
(21) Application number: 19150764.9
(22) Date of filing: 08.01.2019
(51) Int. Cl.: G08G 1/01, B60W 50/00

(54) **METHOD FOR PLANNING TRAJECTORY OF VEHICLE**

(71) Applicant: Visteon Global Technologies, Inc., Van Buren Township, MI 48111-5711 (US)
(72) Inventor: KULKARNI, Shripad, Maharashtra, Pin 413208 (IN); WEDEL, Andreas, 76139 Karlsruhe (DE); PFEIFLE, Martin, 72297 Seewald (DE)
(74) Representative: MERH-IP Matias Erny Reichl Hoffmann Patentanwälte PartG mbB

(57) **Abstract**

A method for controlling a trajectory of an ego vehicle (EV) comprises a step of obtaining map data describing connectivity of lanes at an intersection, a step of obtaining first turn probabilities for each connection of lanes at the, and a step of planning a trajectory of the ego vehicle (EV) at the intersection in accordance with the first turn probabilities.

## Description

### TECHNICAL FIELD

One or more embodiments described herein relate to a method and a system for controlling a trajectory of an ego vehicle. In particular one or more embodiments related to a method and a system for planning a trajectory an autonomous motor vehicle are presented.

### BACKGROUND

In order to plan a safe trajectory in accordance with a current traffic situation, an autonomous vehicle do not only need to know their own position, heading and velocity, they also need to anticipate the behavior of other road participants, in particular other vehicles. For this purpose, the future positions of all road participants within a certain radius around an ego vehicle is predicted, wherein the term "ego vehicle" refers to the autonomous vehicle under consideration. Conventionally, the prediction of the future positions of other road participants is based on data obtained by a plurality of sensors of the ego vehicle for perceiving its surroundings. Such sensors make use of radar, laser light, lidar ("light detection and ranging"), GPS ("global positioning system"), odometry, and/or computer vision. A control system of the ego vehicle interprets the sensory information to identify other road participants, appropriate navigation, or most probable paths, as well as obstacles and relevant traffic signs. The navigation path is determined by a trajectory planning system. For example, the sensors can detect the positions and headings of other road participants and derive probabilities of the road participants making a turn at an intersection.

Predicting the turn probabilities of other road participants is particularly important within urban environments where there are many intersections which may be of a high complexity compared to simple ramps or exits on highways. Thus, there is an increased need for improving the accuracy of predicting turns of other road participants when navigating an autonomous vehicle within urban areas.

### BRIEF SUMMARY OF THE INVENTION

In order to solve the problems of the conventional prediction methods described above, it is proposed to provide a method for controlling an ego vehicle according to claim 1. In particular an improved method for controlling and planning of a trajectory of an autonomous motor vehicle is provided. Furthermore, a system for controlling an ego vehicle according to claim 10 is provided.

A method for controlling a trajectory of an ego vehicle according to an aspect comprises a step of obtaining map data describing connectivity of lanes at an intersection. An intersection is a junction where two or more roads meet or cross. Intersections may be classified by number of road segments, traffic controls, and/or lane design. For example, the flow of traffic at an intersection may be controlled by means of traffic lights, traffic signs (e.g. yield signs or stop signs), and/or traffic rules which may vary by country (traffic coming from the right often has priority). The connectivity of lanes describes which lanes are connected to each other, such that traffic can flow from one lane to the other. The map data may be stored locally in the ego vehicle itself or it may be stored in a database which can be accessed via a network, for example by connecting to a server. The step of obtaining the map data may thus refer to a process of accessing the database and transmitting the map data to the ego vehicle.

According to an aspect, method, trajectory data comprising a plurality of trajectories recorded at the intersection may be recorded. For example, trajectories may be recorded by means of reference vehicles or by leveraging anonymized crowd-sourced trajectory data. This crowd-sourced trajectory data may be provided by users of smart phones with map or GPS navigation applications. In particular, the trajectories may be recorded for a specific intersection which the ego vehicle is currently approaching or is going to approach next.

According to an aspect, the method may comprise a step of obtaining first turn probabilities for each connection of lanes at the intersection. Alternatively, the first turn probabilities may be obtained only for those connections of lanes which are currently relevant to the trajectory planning of the ego vehicle. For example, only few other road participants may be present at the intersection such that only those connection relevant to the currently present road participants may be considered during the step of obtaining first turn probabilities.

According to an aspect, the turn probabilities may be calculated offline, for example at a server, which performs a statistical evaluation of available trajectory data. In other words, the turn probabilities may be calculated by analyzing the number of vehicles which have taken a certain turn from one lane to another compared to the total amount of vehicles and/or turns taken. This evaluation may be performed, for example, by using historical data recorded within a specified period of time. On average, a larger amount of historical trajectories will provide more accurate turn probabilities. For each of a plurality of lanes, turn probabilities may be provided for each possible turn, wherein a turn can include for example a left turn, a right turn, or a straight continuation. The sum of the turn probabilities for each lane should be equal to one.

According to an aspect, the step of calculating first turn probabilities may be carried out at a server for all intersections in a specified range of a map. The first turn probabilities may then be stored as a layer of information comprised in the map which may be stored at the ego vehicle. Thus, first turn probabilities for each intersection may be provided to the ego vehicle. The ego vehicle can be configured to request first turn probabilities for all intersections along a planned trajectory from the server.

Another step of the method may comprise planning a trajectory of the ego vehicle at the intersection in accordance with the first turn probabilities. In particular when the planned route of the ego vehicle crosses trajectories of other road participants which have a high first turn probability, the ego vehicle may adapt its trajectory planning in order to adapt its own conduct to the predicted behavior of other road participants. This way, safety and comfort of the journey can be improved.

According to an aspect the method may include a step of detecting positions and headings of road participants within a predetermined radius around the ego vehicle. In particular, the positions and headings may be detected by means of sensors provided in the ego vehicle. Alternatively, the ego vehicle may communicate with other road participants or a central server to receive position and heading information of road participants within a predetermined radius around the ego vehicle or around a specific intersection. The predetermined radius may depend mainly on the detection range of the sensors. Typically, the predetermined radius is not larger than about two hundred meters. The expression "road participant" includes vehicles other than the ego vehicle, pedestrians and/or cyclists. By detecting the positions and headings of other road participants, it is possible to more reliably predict their respective behavior. For example, a position and/or a heading of another vehicle may be indicative of an imminent turning maneuver.

According to an aspect, second turn probabilities may be calculated for each road participant at the intersection and/or within a specified radius around the ego vehicle as a function of the detected position and/or heading. For example, when a vehicle approaches a four-way intersection (i.e. crossroads where two two-way roads intersect) with the possibility of taking a left turn or a right turn or to continue straight ahead, each of the three possibilities may be assigned with an equal turn probability of one third. Once the vehicle enters the intersection and changes its heading toward the right, the probability for a right turn increases significantly. On the other hand, for taking a left turn the vehicle has to enter the intersection before starting to turn left (in the case of right-hand traffic). Thus, as a function of the position, the turn probabilities of the vehicle either taking a left turn or continuing straight ahead both significantly increase, while the turn probability for a right turn significantly decreases. On the other hand, when driving on a highway, the probability for a road participant to take an exit (i.e. to turn right) is relatively low, if this road participant is not driving along the right lane (in the case of right-hand traffic). Thus, by detecting positions and headings of other road participants, second turn probabilities can be calculated which describe a current situation more accurately than the first turn probabilities based on historic traffic data.

According to an aspect, the method may comprise a step of calculating combined turn probabilities for each road participant as a function of the first and second turn probabilities. This way, both the first turn probabilities based on the trajectories and the second turn probabilities based on the position and/or heading information may be combined. The accuracy of the combined turn probability may be significantly higher than that of only the first or second turn probabilities. Therefore, an improved prediction of the behavior of other road participants can be obtained. Furthermore, by combining first and second turn probabilities, statistical information describing the behavior of many road participants can be combined with situational information of a current traffic situation.

According to an aspect, the trajectory of the ego vehicle may be planned in accordance with the combined turn probabilities. Since the combined turn probabilities are more accurate, the trajectory of the ego vehicle can be planned with an improved certainty which can result in a safer and more comfortable journey in an autonomous vehicle, in particular within areas having a high density of intersections, such as urban environments. Moreover, by taking into account combined turn probabilities, the ego vehicle can react to a current state of traffic while at the same time planning the trajectory based on historical traffic data.

According to an aspect, first turn probabilities may be obtained in accordance with a current date and/or time. Traffic at certain intersections or specified regions on a map may vary between business days, public holidays, and weekends. Furthermore, the traffic may vary depending on the time of day. For example, during the morning rush hour, a higher number of turns towards a certain direction may be more likely than during the afternoon rush hour or during the night. During weekends or public holidays turns towards yet other directions may be more probable. Thus, the prediction accuracy may be increased when taking into account date and/or time. Accordingly, the first turn probabilities may be calculated using trajectory data which has been selected according to a specified day or time. Thus, a current traffic situation may be reflected more accurately in the first turn probabilities. By taking into account the current time and/or date, the trajectory planning may lead to a shorter journey time.

According to another aspect, the map data may include traffic rule data. Traffic rule data describes which turns are allowed and which turns are not allowed according to traffic rules. Furthermore, the traffic rules may even be time dependent. Moreover, even though traffic rules prohibit a certain turn, the associated turn probability may not be equal to zero. However, the likelihood of a road participant taking an illegal turn may be expected to be lower than the road participant taking a legal turn. Thus, by taking into account traffic rule data, the prediction accuracy may be increased. Furthermore, according to yet another aspect, traffic rules may be detected for example by identifying traffic signs using sensors of the ego vehicle. Moreover, a current traffic light phase may be detected and taken into account when calculating turn probabilities.

According to yet another aspect, the method may include a step of detecting at least one localization object and a step of localizing the intersection within the map data using the at least one detected localization object. A localization object may comprise one or more traffic signs, buildings, road markings or other features which can be detected by sensors of the ego vehicle. Furthermore, GPS data and/or odometry can be used for localizing the ego vehicle within the map. Localizing the ego vehicle is important in order to identify an intersection and the associated turn probabilities.

According to an aspect, the method may comprise detecting indicator settings of each road participant. The second turn probabilities can then be calculated as a function of the detected indicator settings. Conventionally, direction indicators, or turn signals, are used to advertise a driver's intent of turning or changing lanes to other drivers. By detecting the indicator settings of other road participants using sensors, the accuracy of predicting turn probabilities can be improved.

According to an aspect, the first turn probabilities are calculated for each road participant, in particular for each road participant within a specified range around the ego vehicle. When the first turn probabilities are only calculated for road participants within a specified range of the ego vehicle, a computational load may be decreased since it may be unnecessary to calculate first turn probabilities for all possible lane connections at an intersection. According to a further aspect, the first turn probabilities may be calculated only for those road participant with a possibility of taking a turn which may interfere with a trajectory of the ego vehicle, whereby the computational load may be further reduced.

Furthermore, according to another aspect, the second turn probabilities may be calculated for each road participant approaching the intersection. When the second turn probabilities are calculated for each road participant approaching the intersection that the ego vehicle is at or which the ego vehicle is currently approaching, a complete picture of the current traffic situation at the intersection may be obtained and evaluated. This way, the optimal trajectory in terms of safety and comfort can be planned for the ego vehicle.

According to yet another aspect, the ego vehicle may generate trajectory data and transmit the generated trajectory data to a server. Trajectory data can be generated for example by recording GPS location data together with a time stamp. This data can be uploaded to a server, for example via a wireless communication network. By generating trajectory data, statistics can be improved and ultimately the accuracy of the prediction of first turn probabilities can be more accurate. Especially when a large number of road participants uploads trajectory data, the amount of available trajectories for statistical evaluation can be increased.

According to an aspect, a system for controlling a trajectory of an ego vehicle is configured to carry out a method according to aspects described herein. The system for controlling a trajectory of an ego vehicle according to an aspect may comprise a map storage unit for storing map data describing connectivity of lanes at an intersection. The map storage unit may be implemented as a database at a centralized server or cloud which can be accessed via a network. Alternatively, the map storage unit may be implemented in the ego vehicle itself. In this case, the map data stored locally in the ego vehicle may be updated by accessing a central server or cloud via a network.

According to another aspect, the system may comprise a turn probability storage unit for storing first turn probabilities for each connection of lanes at the intersection. One embodiment of a turn probability storage unit may comprise a computer system or a server connected to a network.

According to an aspect, the system may comprise a trajectory planning unit for planning a trajectory of the ego vehicle at the intersection in accordance with the first turn probabilities. Embodiments of such a trajectory planning unit may be implemented in a control system for steering and navigating an autonomous vehicle.

According to yet another aspect, the system may further comprise a sensor unit for detecting positions and headings of road participants within a predetermined radius of the ego vehicle. Embodiments of the sensor unit may comprise at least one of: a camera and/or a radar sensor and/or an infrared sensor and/or a laser sensor. Sensor data may be evaluated using dedicated processing units for detecting objects such as road participants and/localization objects and the like. A sensor unit with a plurality of different sensors can reliably detect objects independently of lighting conditions and/or complex situations with a plurality of static and moving objects, even when the ego vehicle itself is moving.

According to an aspect, the turn probability prediction unit may be configured for calculating second turn probabilities for each road participant at the intersection as a function of the detected position and heading; and for calculating combined turn probabilities for each road participant as a function of the first and second turn probabilities.

According to an aspect the trajectory planning unit may be configured for planning the trajectory of the ego vehicle in accordance with the combined turn probabilities.

According to an aspect the sensor unit is configured for detecting indicator settings of each road participant, and the turn probability prediction unit is configured for calculating the second turn probabilities as a function of the detected indicator settings.

According to an aspect, the turn probability prediction unit may be located at a server comprising a communication unit for transmitting the calculated first and second turn probabilities to the trajectory planning unit located in the ego vehicle comprising a communication unit for receiving the calculated first and second turn probabilities.

According to another aspect, the turn probability prediction unit and the trajectory planning unit are located in the ego vehicle. The turn probability prediction unit and the trajectory planning unit may be implemented as separate computer systems or by means of separate applications being executed by a single computer system.

The method is described to be carried out for a specified intersection, in particular an intersection which the ego vehicle is currently approaching. However, it is understood that the method may be carried out for a plurality of intersections within a specified range around the ego vehicle. Furthermore, the method may be carried out for all intersections of a map which is provided by a server to the ego vehicle, such that at least the first turn probabilities can be obtained directly from the server without the need to carry out the calculation step again.

### BRIEF DESCRIPTION OF THE DRAWINGS

Fig. 1 schematically illustrates an intersection with trajectory data.
Fig. 2 schematically illustrates turn possibilities for one lane of an intersection.
Figs. 3a, 3b, and 3c schematically illustrate an intersection with an ego vehicle taking a left turn and another vehicle.

### DETAILED DESCRIPTION OF THE INVENTION

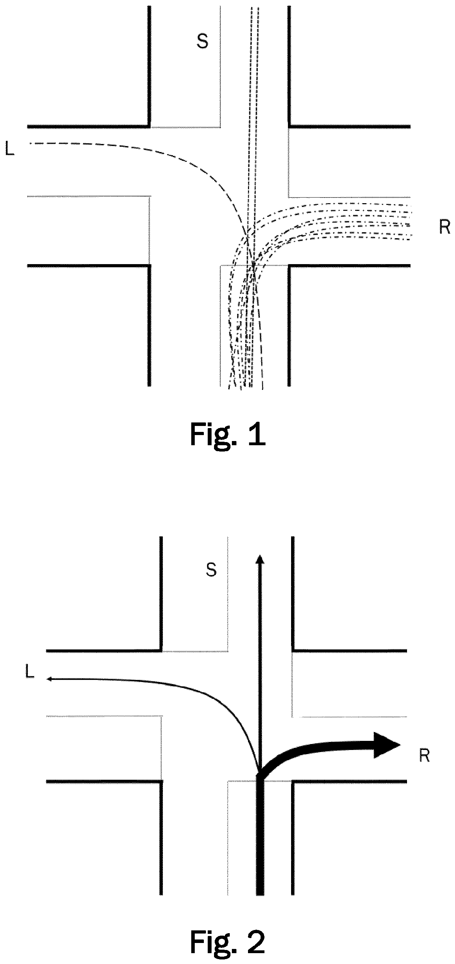

Fig. 1 schematically illustrates an example of a four-way intersection with two two-way roads crossing each other at an angle of ninety degrees. A plurality of trajectories is indicated in Fig. 1. Each of the trajectories starts out from the bottom of the right lane of the road leading from top to bottom of the drawing. Each trajectory represents a vehicle having taken a left turn L (long dashed lines), a right turn R (dashed-dotted lines), or a vehicle having continued straight ahead S (short dashed lines). Here, the number of lines shown in the figure shall be indicative of the turn probabilities used in the following example. Each trajectory may have been recorded, for example by a driver's mobile phone with a GPS sensor or by sensors provided in each of the vehicles. Such trajectories are also referred to as historic traffic data which may have been recorded within a predetermined period of time such as several hours, a day, or several days to weeks or even months or years.

Seven out of the ten trajectories correspond to vehicles taking a right turn R, two trajectories continue straight ahead S and one trajectory corresponds to a left turn L. Turn probabilities can be evaluated using statistics. In the present example, the turn probability of a right turn R is seven out of ten or 0.7, the turn probability for straight ahead S is two out of ten or 0.2, and the turn probability of a left turn L is one out of ten or 0.1. Of course, in order to obtain more reliable values, a much higher number of trajectories may be evaluated. However, for the purpose of illustration, only ten trajectories have been drawn in the figure.

Fig. 2 shows a representation of the three possible turns R, S, L for a vehicle coming from the bottom right lane. Here, the turn probabilities are represented by the thickness of the three arrows. For example, the likelihood for a vehicle taking a right turn R is 0.7, the likelihood for a vehicle continuing straight ahead S is 0.2, and the likelihood for a vehicle taking a left turn L is 0.1. Theses turn probabilities are examples of first turn probabilities calculated from the exemplary trajectories illustrated in Fig. 1. Summarizing, there is a high likelihood that any given vehicle coming from the bottom right lane will take a right turn R. The likelihood of a vehicle continuing straight S is considerably lower than taking a right turn R but twice as high as that of taking a left turn L.

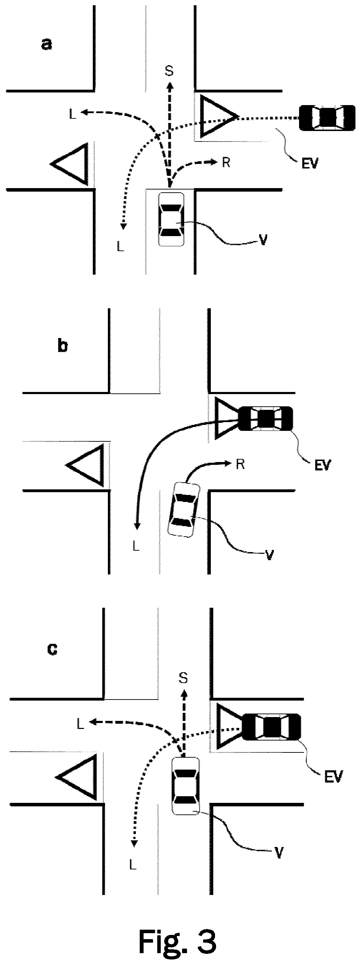

Figs. 3a to 3c illustrate an example of trajectory planning by an ego vehicle EV at the four-way intersection of Figs. 1 and 2. The ego vehicle EV is illustrated as the black car coming from the right. The ego vehicle EV is an autonomous comprising a plurality of sensors for perceiving its surrounding. Furthermore, the ego vehicle EV comprises control systems for steering and navigation. One component of the control system is a trajectory planning unit for planning the trajectory of the ego vehicle EV.

The arrow with the dotted line in Fig. 3a indicates that the trajectory planning unit of the ego vehicle EV wants to take a left turn L. Another road participant, the white car V, also approaches the intersection. In the present example it is assumed that traffic travelling on the vertically drawn road, i.e. the white car V, has priority. This is indicated by the yield signs on the horizontally drawn road.

Thus, in the case of Fig. 3a, the trajectory planning system of the ego vehicle EV has to take into account that it has to give way of right to the other vehicle V. However, instead of stopping and waiting for the white car to proceed, the ego vehicle EV will predict the other vehicle's V behavior using its turn probability prediction unit. The turn probability prediction unit comprises a map storage unit for storing map data describing connectivity of lanes at the intersection. In other words, the map storage unit stores a map of the present intersection with information describing all possible turns from all possible directions. Furthermore, the ego vehicle has a turn probability storage unit for storing turn probabilities. The first turn probabilities have been calculated offline for each connection of lanes at the intersection. The result of this calculation for the possible turns of the white car V is illustrated in Fig. 2 and has been described above.

Thus, at the time of Fig. 3a, the trajectory planning unit of the ego vehicle assumes that the white car V will take a right turn R with a probability of 0.7, continue straight ahead S with a likelihood of 0.2, or will take a left turn L with a probability of 0.1.

As mentioned above, the ego vehicle EV comprises sensors for perceiving its surroundings. Inter alia, the ego vehicle EV has a sensor unit for detecting positions and headings of other road participants within a predetermined radius of the ego vehicle EV. In the present embodiment, the sensor unit of the ego vehicle EV comprises a stereo camera, a radar sensor, and an infrared sensor. Since the white car V is within a detection range of the sensor unit, position and heading of the white car can be detected.

Using the detected position and heading of the white car V, the turn probability prediction unit of the ego vehicle EV calculates second turn probabilities. In Fig. 3a the white car V is about to enter the intersection. Its heading can be expressed as an angle with regard to the line markings of the lane it is currently driving on. Thus, in Fig. 3a the heading of the white car is zero degrees. The turn probability prediction unit thus assumes an equal probability of one third for the white car V to turn left L, continue straight ahead S, or turn right R.

Fig. 3b illustrates a situation shortly after the situation of Fig. 3a. Here, the white car V has entered the intersection and changed its heading toward the right R. Based on the heading, the likelihood for taking a right turn R has increased significantly. The turn probability prediction unit therefore predicts a new value for the second turn probability based on position and heading of the white car V. For example, the likelihood for a right turn R has doubled and is now calculated as 6/9 (two thirds), the likelihood for continuing straight ahead S is 2/9, and the likelihood for a left turn L is 1/9.

The turn probability prediction unit can now calculate a combined turn probability for the white vehicle V as a function of the first and second turn probabilities. For example, the combined turn probability can be calculated by multiplying the first and second turn probabilities. The resulting probabilities are then divided by the sum of the resulting probabilities, such that the sum of the combined probabilities is one. The values of the present example are summarized in table 1.

**Table 1: turn probabilities calculated for the example of Fig. 3b**

| | **first turn probability** | **second turn probability** | **first times second turn probability** | **combined turn probability** |
|---|---|---|---|---|
| **R** | 0.7 | 6/9 | 0.4667 | 0.8936 |
| **S** | 0.2 | 2/9 | 0.0444 | 0.0851 |
| **L** | 0.1 | 1/9 | 0.0111 | 0.0213 |
| **Sum** | 1 | 1 | 0.5222 | 1 |

As can be seen from Table 1, the combined turn probability of the white car V taking a right turn R is significantly higher than either of the first or second turn probabilities. Accordingly, the combined turn probabilities for a left turn L or going straight ahead S each are significantly lower than either of the first and second turn probabilities. Thus, by means of calculating the combined turn probabilities, a much more accurate prediction can be obtained.

As a result of the calculated combined turn probability of about 0.9, indicating a very high likelihood that the white car takes a right turn R in the situation of Fig. 3b, the trajectory planning unit of the ego vehicle EV can cause the control system of the ego vehicle EV to take the planned left turn L without the need to slow down and wait for the white car V to pass. Thus, the intersection can be navigated more insistently while at the same time maintaining a high level of safety due to the improved prediction of the behavior of the white car V. Incidentally, a similar result would be obtained if the ego vehicle EV would approach the intersection from the left, planning to take a left turn.

A different case is illustrated in Fig. 3c. Here, the white car V has entered the intersection without changing its heading. The current position of the white car V detected by the sensor unit of the ego vehicle causes the turn probability prediction unit to predict a very low likelihood of the white car V to take a right turn R, and high likelihoods for either taking a left turn L or continuing straight ahead S. Since the predicted trajectory of the white car V will interfere with the planned trajectory of the ego vehicle, this prediction will cause the trajectory planning unit to alert the steering system to slow down the ego vehicle and give way to the white car V.

Additionally to detecting position and heading of other road participants, the sensor unit of the ego vehicle can be configured for detecting indicator settings of other road participants V. In the example of Fig. 3, an indicator setting of the white car V can be detected by the camera of the ego vehicle. However, since drivers may accidentally set an indicator or forget to set indicators before taking a turn, the detected indicator setting will have only a minor effect on the calculated turn probability.

The described method for controlling a trajectory of an ego vehicle thus allows to reliably predict the turn probabilities of road participants. This allows to better adapt the behavior of the ego vehicle EV to the predicted behavior of other vehicles V, in particular at intersections. The described method can therefore greatly improve the performance and operation safety of autonomous vehicles, especially in urban environments.

The features described in the above description, claims and figures can be relevant to the invention in any combination. Their reference numerals in the claims have merely been introduced to facilitate reading of the claims. They are by no means meant to be limiting.

Throughout this specification various indications have been given as to preferred and alternative embodiments of the invention. However, it should be understood that the invention is not limited to any one of these. It is therefore intended that the foregoing detailed description be regarded as illustrative rather than limiting, and that it be understood that it is the appended claims, including all equivalents, that are intended to defined the sprit and scope of this invention.

### REFERENCE NUMERALS

- EV: ego vehicle
- V: other vehicle
- L: left turn
- S: straight ahead
- R: right turn

## Claims

1. Method for controlling a trajectory of an ego vehicle (EV), the method comprising:
obtaining map data describing connectivity of lanes at an intersection;
obtaining first turn probabilities for each connection of lanes at the intersection; and
planning a trajectory of the ego vehicle (EV) at the intersection in accordance with the first turn probabilities.

2. Method according to claim 1, further comprising:
detecting positions and headings of road participants (V) within a predetermined radius of the ego vehicle (EV);
calculating of second turn probabilities for each road participant (V) at the intersection as a function of the detected position and heading; and
calculating combined turn probabilities for each road participant as a function of the first and second turn probabilities, wherein
the trajectory of the ego vehicle (EV) is planned in accordance with the combined turn probabilities.

3. Method according to claim 1 or 2, wherein the first turn probabilities are obtained in accordance with a current date and/or time.

4. Method according to at least one of the previous claims, wherein the map data includes traffic rule data.

5. Method according to at least one of the previous claims, further comprising:
detecting at least one localization object; and
localizing the intersection within the map data using the at least one detected localization object.

6. Method according to claim 2, further comprising:
detecting indicator settings of each road participant (V), wherein
the second turn probabilities are calculated as a function of the detected indicator settings.

7. Method according to at least one of the previous claims, wherein the first turn probabilities are calculated for each road participant.

8. Method according to claim 2, wherein the second turn probabilities are calculated for each road participant approaching the intersection.

9. Method according to at least one of the previous claims, wherein the ego vehicle (EV) generates trajectory data for calculating turn probabilities and transmits the generated trajectory data to a server.

10. System for controlling a trajectory of an ego vehicle (EV), the system comprising:
a map storage unit for storing map data describing connectivity of lanes at an intersection;
a turn probability storage unit for storing first turn probabilities for each connection of lanes at the intersection; and
a trajectory planning unit for planning a trajectory of the ego vehicle (EV) at the intersection in accordance with the first turn probabilities.

11. System according to claim 10, further comprising:
a sensor unit for detecting positions and headings of road participants (V) within a predetermined radius of the ego vehicle (EV), wherein
the turn probability prediction unit is configured for:
calculating second turn probabilities for each road participant (V) at the intersection as a function of the detected position and heading; and for
calculating combined turn probabilities for each road participant as a function of the first and second turn probabilities, and wherein
the trajectory planning unit is configured for planning the trajectory of the ego vehicle (EV) in accordance with the combined turn probabilities.

12. System according to claim 11, wherein the sensor unit comprises at least one of: a camera and/or a radar sensor and/or an infrared sensor and/or a laser sensor.

13. System according to claim 12, wherein the sensor unit is configured for detecting indicator settings of each road participant (V), and
the turn probability prediction unit is configured for calculating the second turn probabilities as a function of the detected indicator settings.

14. System according to one of claim 10 to 13, wherein the turn probability prediction unit is located at a server comprising a communication unit for transmitting the calculated first and second turn probabilities to the trajectory planning unit located in the ego vehicle (EV) comprising a communication unit for receiving the calculated first and second turn probabilities.

15. System according to one of claim 10 to 13, wherein the turn probability prediction unit and the trajectory planning unit are located in the ego vehicle (EV).
